(19) Europäisches Patentamt
European Patent Office
Office européen des brevets

(11) Veröffentlichungsnummer : **0 090 244**
**B1**

(12) # EUROPÄISCHE PATENTSCHRIFT

(45) Veröffentlichungstag der Patentschrift : **25.03.87**

(51) Int. Cl.[4] : **C 09 B 1/467**, C 09 B 5/36, C 09 B 69/00// C09B3/00, C09B5/00

(21) Anmeldenummer : **83102483.1**

(22) Anmeldetag : **14.03.83**

(54) **Verfahren zur Herstellung von Triazinylküpenfarbstoffen.**

(30) Priorität : **26.03.82 DE 3211300**

(43) Veröffentlichungstag der Anmeldung : **05.10.83 Patentblatt 83/40**

(45) Bekanntmachung des Hinweises auf die Patenterteilung : **25.03.87 Patentblatt 87/13**

(84) Benannte Vertragsstaaten : **CH DE FR GB LI**

(56) Entgegenhaltungen :
**EP-A- 0 025 166**
**DE-A- 2 919 509**
**DE-C- 590 163**
**FR-A- 1 394 618**
**GB-A- 2 023 160**

(73) Patentinhaber : **BAYER AG**
**Konzernverwaltung RP Patentabteilung**
**D-5090 Leverkusen 1 Bayerwerk (DE)**

(72) Erfinder : **Hohmann, Walter, Dr.**
**Fontanestrasse 17**
**D-5090 Leverkusen (DE)**
Erfinder : **Wunderlich, Klaus, Dr.**
**Carl-Rumpffstrasse 21**
**D-5090 Leverkusen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 090 244 B1

**Beschreibung**

Die Erfindung betrifft ein Verfahren zur Herstellung von Triazinylküpenfarbstoffgemischen, die Farbstoffe der Formeln

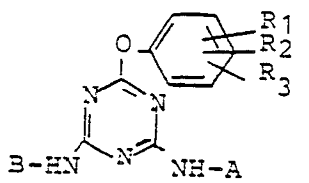

und

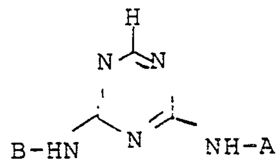

(I) (II)

enthalten, wobei

A, B verküpbare Reste und

$R_1$, $R_2$, $R_3$ Wasserstoff, Halogen, insbesondere Cl, Br, F, Carboxy, Alkyl, insbesondere $C_1$-$C_6$-Alkyl, und Alkoxy, insbesondere $C_1$-$C_6$-Alkoxy bezeichnen,

dadurch gekennzeichnet, daß man Cyanurchlorid in einem Phenol der Formel

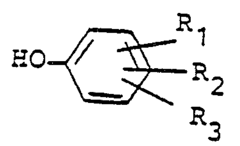

(III)

mit etwa 1,6 bis etwa 2,4 Mol der Amine $H_2N$—A und/oder $H_2N$—B im wesentlichen in Abwesenheit von alkalisch reagierenden Verbindungen bei Temperaturen von etwa 80 bis etwa 200 °C, vorzugsweise 100-180 °C, zu Verbindungsgemischen der Formeln I und II umsetzt, und diese anschließend isoliert.

Die Verbindungen der Formeln I und II sind an sich bekannt. Die Herstellung der Verbindungen der Formel I erfolgte bisher allein in zweistufigen Prozessen ausgehend von Cyanurchlorid durch Chlor-Aminaustausch und Chlor-Phenolat-Austausch in beliebiger Reihenfolge.

Je nach Reihenfolge treten dabei als Zwischenprodukte die Verbindungen der Formeln IV und V auf

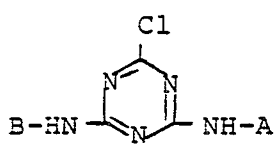

(IV)

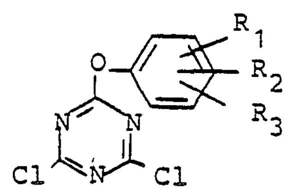

(V)

In der Regel erfolgt dabei eine Zwischenisolierung dieser beider Stufen, die Herstellung des Verbindungstyps I ist aber auch schon in einem 2-Stufen-Eintopfverfahren erfolgt. In jedem Fall erfolgte der Cl-Phenoxy-Austausch aber durch Umsetzung mit den Alkaliphenolaten.

Aus DE-C-590 163 ist es bekannt, Cyanurchlorid in einem Phenol mit stöchiometrischen Mengen von Aminoanthrachinonen unter Ersatz der Chloratome durch Aminoanthrachinonreste zu kondensieren.

Die FR-A-1 394 618 beschreibt u. a. die Umsetzung von 1 Mol Cyanurchlorid mit 2 Mol eines 1-Amino-4-arylaminoanthrachinons in einem Lösungsmittel und den anschließenden Ersatz des dritten Chloratoms von Cyanurchlorid mittels eines Alkalimetallphenolats.

Es ist nun ganz überraschend, daß ein Chlor-Phenoxy-Austausch im wesentlichen in Abwesenheit von alkalisch reagierenden Verbindungen auch mit den sauer reagierenden Phenolen selbst gelingt. Der Austausch des dritten Chloratoms von Cyanurchlorid gelingt z. B. mit 1-Amino-5-benzoyl-amino-anthrachinon selbst in Phenol nur partiell. Es ist um so überraschender, daß selbst in 2,4-Dianthrachinonylamino-6-chlortriazin ein Chlor-Phenoxy-Austausch ohne Alkali gelingt.

Die Herstellung der Verbindungen der Formel II erfolgte entweder durch Chlor-Aminaustausch im nicht ganz leicht zugänglichen 2,4-Dichlor-s-triazin oder in einem Zweistufenprozeß aus Cyanurchlorid durch Austausch von nur zwei Chloratomen gegen gegebenenfalls substituierte Aminoanthrachinone und nachfolgender reduktiver Entfernung des dritten Chloratoms mittels Hydrazinhydrat (DE-A-2 919 509). Bei der Arbeitsweise gemäß der vorliegenden Erfindung ist es überraschend, daß zur Entfernung des 3. Chloratoms bereits die Behandlung mit Phenol in der Wärme ausreicht.

Da der Chlor-Amin-Austausch einerseits und der Chlor-Phenoxy- bzw. Chlor-Wasserstoff-Austausch andererseits Konkurrenzreaktionen sind, empfiehlt es sich das molare Verhältnis der Amine zum Cyanurchlorid ungefähr bei 2 : 1 zu halten. Verbindungen der Formel I entstehen als Hauptprodukte noch im Bereich 1,6-2,4 : 1, bevorzugt sind aber Verhältnisse 1,8-2,2 : 1 und ganz besonders 1,9-2,1 : 1.

Reaktionszeiten, -temperaturen, -Verdünnungsverhältnisse hängen dabei in starkem Maße von der Art des einzukondensierenden Amins, in geringerem Maße auch von der Art des Phenols, wie dies in sehr eindrucksvoller Weise in den Beispielen 1-3 gezeigt wird, ab. Die optimalen Bedingungen müssen von Fall zu Fall ermittelt werden, in jedem Falle werden die gewünschten Produkte nahe Siedetemperatur der Phenole erhalten, häufig führen aber schon wesentlich mildere Bedingungen zum Ziel. Dabei kann als Faustregel gelten, je höher/niedriger die erforderliche Temperatur für den Chloraustausch ist, umso kleiner/größer ist der Anteil des Farbstoffs im Gemisch, der durch Chlor-Wasserstoff-Austausch gebildet wird. Dies läßt sich durch geeignete analytische Methoden z. B. IR-Spektroskopie nachweisen. Die Phenolmengen können zwischen dem 2-20fachen schwanken, aus ökonomischen Gründen fährt man so konzentriert wie möglich.

Als verküpbare Reste A, B kommen in erster Linie Reste von polycyclischen chinoiden Verbindungen, insbesondere Reste von 9,10-Anthrachinonen oder Anthrachinonen, die weitere ankondensierte carbo- und/oder heterocyclische Ringe enthalten wie Benzanthrone, Anthanthrone, Pyrazolanthrone, Oxazolanthrachinone, Isothiazolanthrachinone, Thiazolanthrachinone, Anthrapyridine, Anthrimide, Anthrimidcarbazole, insbesondere aber Phthaloylacridone in Frage.

Als Beispiele für 9,10-Anthrachinone ($A—NH_2$, $B—NH_2$) seien genannt: 2-Amino-anthrachinon, 1-Amino-2-methyl-anthrachinon, 1-Amino-2-, 3-, 4-, 5-, 6-, 7- oder -8-chlor- oder -bromanthrachinon, 1-Amino-2,3-dichlor- oder 1-Amino-2,7-dichlor-anthrachinon, 1-Amino-4-, 5- oder 8-methoxy-anthrachinon, 1-Amino-4-, 5- oder 8-acetylaminoanthrachinon, 1-Amino-4-, 5- oder 8-toluolsulfonylaminoanthrachinon, 2-Amino-3- oder 4-chlor-anthrachinon, 1,4-Diamino-2-acetyl-anthrachinon und besonders bevorzugt 1-Amino-anthrachinon sowie 1-Amino-5-benzoylamino-anthrachinon.

Als Phenole der Formel III seien beispielhaft erwähnt: 2-, 3- oder 4-Chlor-phenol, 2,4-Dichlorphenol, 2-, 3- oder 4-Alkoxyphenol, insbesondere 2-, 3- oder 4-Methoxyphenol, 2-, 3- oder 4-Alkylphenol, insbesondere 2-, 3- oder 4-Methylphenol, Carboxyphenole und insbesondere Phenol selbst.

Das neue Verfahren dient insbesondere zur Herstellung von Farbstoffgemischen, die Farbstoffe der Formeln

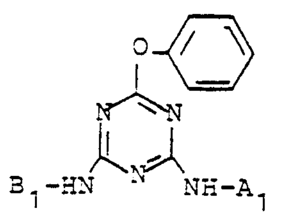

(VI)

und

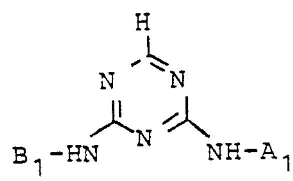

(VII)

enthalten, worin $A_1$, $B_1$ Anthrachinonyl-1,5-Benzoylamino-antrachinonyl-1-, 3,4-Phthaloylacridonyl-2- oder 7-Brom-3,4-phthaloylacridonyl-2-Reste bezeichnen, wobei gegebenenfalls vorzugsweise nur einer der Reste $A_1$ oder $B_1$ für den Anthrachinonyl-1-Rest stehen sollte.

Ganz besonders lassen sich nach dem erfindungsgemäßen Verfahren Farbstoffgemische der Formeln VI und VII herstellen, bei denen $A_1 = B_1$ ist und für einen 5-Benzoylamino-anthrachinonyl-1-, 3,4-Phthaloylacridonyl-2- oder 7-Brom-3,4-phthaloylacridonyl-2-Rest steht.

Die Aufarbeitung kann nach an sich bekannten Methoden erfolgen, z. B. durch Filtration, gegebenenfalls nach vorherigem Verdünnen, mit einem geeigneten Lösungsmittel, z. B. Wasser oder Methanol, durch Wasserdampfdestillation oder bevorzugt durch Abdestillieren überschüssigen Phenols in einem dafür geeigneten Apparat, z. B. einem Schaufeltrockner oder einem Lödige-Reaktor. Da die Reaktionsansätze keinerlei schwerflüchtige anorganische oder organische Begleitstoffe enthalten, hinterbleiben als Rückstand die reinen Farbstoffgemische.

Das neue Eintopfverfahren ist durch seine wesentlich einfachere Art der Durchführung den bekannten Verfahren in ökonomischer Hinsicht überlegen. Man braucht keine kritischen Analysenwerte in Zwischenstufen der Zweistufenverfahren zu beachten.

## Beispiel 1

a) In einem 50 l-Kessel mit Ankerrührer werden 12,57 kg 7-Brom-3,4-phthaloyl-2-amino-acridon und 2,77 kg Cyanurchlorid (entspricht einem Molverhältnis 2 : 1) mit 26,4 kg geschmolzenen trockenem Phenol innerhalb 2 Std. auf 100 °C unter Rühren erwärmt und weitere 3 Stunden bei gleicher Temperatur nachgerührt. Chromatographisch ist jetzt nur noch wenig Amino-acridon nachweisbar und eine entnommene vom Phenol durch Wasserdampfdestillation befreite und getrocknete Probe enthält 15,6 % Brom und 0,6 % Chlor.

Man destilliert nun restliche Reaktionssalzsäure aus der Schmelze im Vakuum weitgehend ab, drückt die Schmelze noch warm in einen 50 l Schaufeltrockner und destilliert im Vakuum mit indirekter Dampfheizung (6 bar Dampf) das Phenol vollständig ab.

Erhalten werden 14,8 kg eines Farbstoffgemisches, welches als Hauptkomponente 2,4-Bis-(7-brom-3,4-phthaloyl-acridonylamino (2))-triazin daneben aber auch 2,4-Bis-(7-brom-3,4-phthaloyl-acridonylami-

no (2))-6-phenoxy-triazin enthält. Daneben sind noch geringe Mengen der analogen 6-Chlor-Verbindung anwesend.

Dieses Produkt färbt, in fein verteilte Form gebracht, Baumwolle aus der Küpe hervorragend echt in klarem, grünstichig blauen Ton.

b) Man arbeitet wie unter a) beschrieben, ersetzt das 7-Brom-3,4-phthaloyl-2-amino-acridon durch eine gleichmolare Menge 1-Amino-5-benzoylamino-anthrachinon und erhöht die Phenolmenge auf das zweifache — dies ist nötig, um Rührbarkeit der Schmelze zu gewährleisten. Man arbeitet wie in a) beschrieben auf, und erhält ein Produkt, welches noch 4,3 % Chlor (theoretisch für Bis-Umsetzungsprodukt 4,5 %) enthält. Es handelt sich also um 2,4-Bis-(5-benzoyl-amino-anthrachinonylamino (1))-6-chlor-triazin. Hier ist also noch kein Chlor-phenoxy- oder Chlor-Wasserstoff-Austausch erfolgt.

## Beispiel 2

a) 68,4 g 1-Amino-5-benzoylamino-anthrachinon und 18,4 g Cyanurchlorid (entspricht einem Molverhältnis 2 : 1) werden in 1 200 g Phenol während 2 1/2 Std. nahe Siedetemperatur (ca. 178-180 °C) verrührt. Nun treibt man das Phenol mit Wasserdampf im Vakuum ab, filtriert, wäscht den Farbstoff gut mit heißem Wasser nach und trocknet. Erhalten werden 82 g eines Gemisches aus 2,4-Bis-(5-benzoylamino-anthrachinonyl-amino (1))-6-phenoxy-triazin und 2,4-Bis-(5-benzoyl-amino-anthrachinolylamino (1))-triazin.

Dieser Farbstoff färbt aus der Küpe Baumwolle in farbstarken brillantem Goldorangeton von sehr guten Allgemeinechtheiten.

b) Wählt man ein molares Verhältnis 1-Amino-5-benzoylamino-anthrachinon/Cyanurchlorid von 2,7 : 1, so erhält man nach dreistündiger Reaktion bei 140-145 °C Farbstoffe, in denen die Chloratome des Cyanurchlorid im wesentlichen durch den Aminorest substituiert sind, aber praktisch kein Chlor-phenoxy-bzw. Chlor-Wasserstoff-Austausch stattgefunden hat. Restchlorwert 2,1 %. In der Schmelze ist chromatographisch noch etwas Amin nachweisbar.

## Beispiel 3

11,4 g 1-Amino-5-benzylamino-anthrachinon, 7,45 g 1-Amino-anthrachinon (molares Verhältnis 1 : 1) und 6,2 g Cyanurchlorid (molares Verhältnis Amine/Cyanurchlorid 2 : 1) werden mit 185 ml Phenol 2 Stunden lang bei 180 °C verrührt, anschließend wird mit Wasserdampf destilliert, filtriert und mit heißem Wasser gewaschen und getrocknet. Erhalten werden 23,9 g eines Farbstoffes der 0,2 % Chlor enthält und Baumwolle aus der Küpe, vorzugsweise nach dem Kaltfärbeverfahren, in golbgelb-goldorangenen Ton färbt. Nach dem Warmfärbeverfahren gefärbt, erhält man eine etwas schwächere Färbung von gleichem Farbton.

## Beispiel 4

44 g 2-Amino-3,4-phthaloylacridon, 9,3 g Cyanurchlorid und 125 g Phenol werden 4 Stunden auf 120 °C erwärmt. Anschließend wird das Phenol durch Wasserdampf abgetrieben, die Farbstoffsuspension filtriert, gewaschen und getrocknet. Erhalten werden 46,9 g eines Farbstoffs, der Baumwolle aus 50-60 °C warmer Küpe in klarem grünstichig blauen Ton färbt. Sein Chlorgehalt beträgt 0,8 %.

## Beispiel 5

Man arbeitet wie in Beispiel 2a beschrieben, setzt aber statt Phenol eine gleich große Menge 4-Methoxy-phenol ein. Nach Wasserdampfdestillation, Filtration, Methanol- und Wasserwäsche werden 82,2 g eines Gemisches aus 2,4-Bis-(5-benzoylamino-anthrachinonylamino (1))-triazin und 2,4-Bis-5-benzoylamino-anthrachinonylamino (1)-6-p-methoxyphenoxy-triazin erhalten. Der Farbstoff färbt, in fein verteilte Form gebracht Baumwolle aus warmer Küpe in klarem Goldorangeton.

## Beispiel 6

44 g 2-Amino-7-brom-3,4-phthaloylacridon, 9,2 g Cyanurchlorid und 125 ml 3-Methylphenol werden 2 Stunden bei 100 °C verrührt; anschließend wird auf 160 °C erwärmt und weitere 2 Stunden gehalten. Nun destilliert man im Vakuum das Methylphenol ab. Erhalten werden 51,2 g eines Gemisches aus 2,4-Bis-(7-brom-3,4-phthaloylacridonylamino (1))-6-m-methyl-phenoxy-triazin und 2,4-Bis-(7-brom-3,4-phthaloylacridonylamino-(1))-triazin. Der Farbstoff färbt Baumwolle in sehr ähnlichem Ton wie das nach Beispiel 1 erhaltene Produkt.

**Patentansprüche**

1. Verfahren zur Herstellung von Triazinylküpenfarbstoffgemischen, die Farbstoffe der Formeln

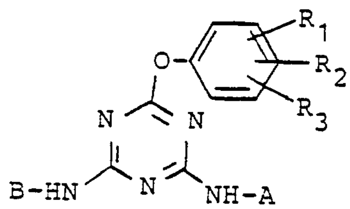

und

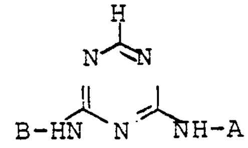

(I) (II)

enthalten, wobei

A, B verküpbare Reste und

$R_1$, $R_2$, $R_3$ Wasserstoff, Halogen, insbesondere Cl, Br, F, Carboxy, Alkyl, insbesondere $C_1$-$C_6$-Alkyl und Alkoxy, insbesondere $C_1$-$C_6$-Alkoxy, bezeichnen,

dadurch gekennzeichnet, daß man Cyanurchlorid in einem Phenol der Formel

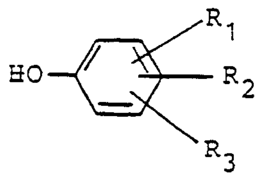

(III)

mit etwa 1,6 bis etwa 2,4 Mol der Amine A—$NH_2$ und/oder B—$NH_2$ im wesentlichen in Abwesenheit von alkalisch reagierenden Verbindungen bei Temperaturen von etwa 80 bis etwa 200 °C zu Verbindungsgemischen der Formeln I und II umsetzt, und diese anschließend isoliert.

2. Verfahren gemäß Anspruch 1, dadurch gekennzeichnet, daß A, B Reste von polycyclischen chinoiden Verbindungen bezeichnen.

3. Verfahren gemäß Anspruch 1, dadurch gekennzeichnet, daß A, B Reste von 9,10-Anthrachinonen oder Anthrachinonen, die weitere ankondensierte carbo- und/oder heterocyclische Ringe enthalten, bezeichnen.

4. Verfahren gemäß den Ansprüchen 1-3, dadurch gekennzeichnet, daß man Phenol einsetzt.

5. Verfahren gemäß den Ansprüchen 1-3, dadurch gekennzeichnet, daß man 2-, 3- oder 4-Chlorphenol, 2,4-Dichlorphenol, 2-, 3- oder 4-Alkoxyphenol, insbesondere 2-, 3- oder 4-Methoxyphenol, 2-, 3- oder 4-Alkylphenol insbesondere 2-, 3- oder 4-Methylphenol oder Carboxyphenole einsetzt.

6. Verfahren gemäß Anspruch 1 zur Herstellung von Farbstoffgemischen, die Farbstoffe der Formeln

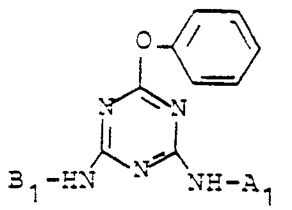

und

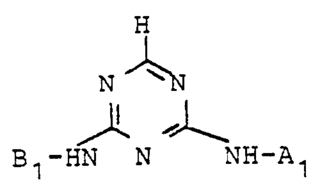

(IV) (V)

enthalten, wobei $A_1$, $B_1$ Anthrachinonyl-1-, 5-Benzoylamino-anthrachinonyl-1-, 3,4-Phthaloylacridonyl-2- oder 7-Brom-3,4-phthaloylacridonyl-2-Reste bezeichnen, wobei gegebenenfalls vorzugsweise nur einer der Reste $A_1$ oder $B_1$ für den Anthrachinonyl-1-Rest steht.

7. Verfahren gemäß Anspruch 6 zur Herstellung von Farbstoffgemischen der Formeln IV und V, in der $A_1 = B_1$ ist und für einen 5-Benzoylamino-anthrachinonyl-1-, 3,4-Phthaloylacridonyl-2- oder 7-Brom-3,4-phthaloylacridonyl-2-Rest steht.

8. Verfahren gemäß den Ansprüchen 1-7, dadurch gekennzeichnet, daß man bei 100-180 °C umsetzt.

9. Verfahren gemäß den Ansprüchen 1-8, dadurch gekennzeichnet, daß man bei einem Verhältnis Amine : Cyanurchlorid wie 1,8-2,2 : 1 arbeitet.

10. Verfahren gemäß den Ansprüchen 1-8, dadurch gekennzeichnet, daß man bei einem Verhältnis Amine : Cyanurchlorid wie 1,9-2,1 : 1 arbeitet.

**Claims**

1. Process for preparing triazinyl vat dyestuff mixtures which contain dyestuffs of the formulae

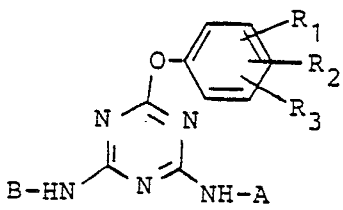

and

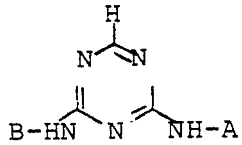

(I) (II)

wherein

A and B designate vattable radicals and

$R_1$, $R_2$ and $R_3$ designate hydrogen, halogen, in particular Cl, Br or F, carboxyl, alkyl, in particular $C_1$-$C_6$-alkyl, and alkoxy, in particular $C_1$-$C_6$-alkoxy,

characterised in that cyanuric chloride is reacted in a phenol of the formula

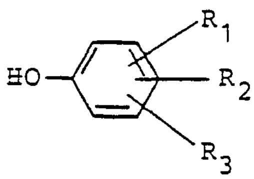

(III)

with about 1.6 to about 2.4 mols of the amines A—$NH_2$ and/or B—$NH_2$, essentially in the absence of compounds which have an alkaline reaction, at temperatures of about 80 to about 200 °C to give mixtures of compounds of the formulae I and II, and these mixtures are then isolated.

2. Process according to Claim 1, characterised in that A and B designate radicals of polycyclic quinonoid compounds.

3. Process according to Claim 1, characterised in that A and B designate radicals of 9,10-anthraquinones or anthraquinones which contain further fused-on carbocyclic and/or heterocyclic rings.

4. Process according to Claims 1-3, characterised in that phenol is used.

5. Process according to Claims 1-3, characterised in that 2-, 3- or 4-chlorophenol, 2,4-dichlorophenol, 2-, 3- or 4-alkoxyphenol, in particular 2-, 3- or 4-methoxyphenol, 2-, 3- or 4-alkylphenol, in particular 2-, 3- or 4-methylphenol, or carboxyphenols are used.

6. Process according to Claim 1 for preparing dyestuff mixtures which contain dyestuffs of the formulae

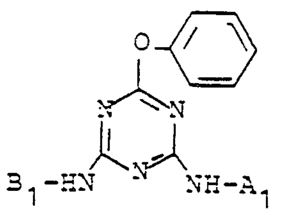

and

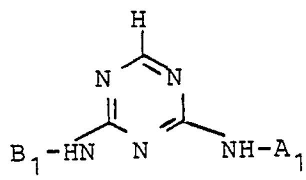

(IV) (V)

wherein $A_1$ and $B_1$ designate anthraquinon-1-yl, 5-benzoyl-aminoanthraquinon-1-yl, 3,4-phthaloylacridon-2-yl or 7-bromo-3,4-phthaloylacridon-2-yl radicals, but, if appropriate, preferably only one of the radicals $A_1$ or $B_1$ represents the anthraquinon-1-yl radical.

7. Process according to Claim 6, for preparing dyestuff mixtures of the formulae IV and V in which $A_1 = B_1$ and represents a 5-benzoylaminoanthraquinon-1-yl, 3,4-phthaloylacridon-2-yl or 7-bromo-3,4-phthaloylacridon-2-yl radical.

8. Process according to Claims 1-7, characterised in that the reaction is carried out at 100-180 °C.

9. Process according to Claims 1-8, characterised in that a ratio of amines to cyanuric chloride of 1.8-2.2 : 1 is used.

10. Process according to Claims 1-8, characterised in that a ratio of amines to cyanuric chloride of 1.9-2.1 : 1 is used.

**Revendications**

1. Procédé de production de mélanges de colorants triazinyliques pour cuve, qui contiennent des colorants de formules

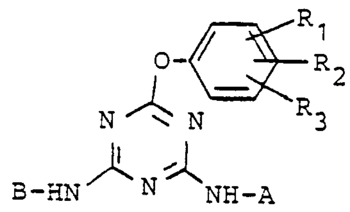 et 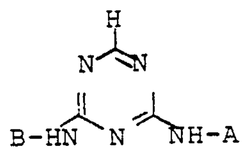

(I) (II)

dans lesquelles

A, B sont des restes réductibles et

$R_1$, $R_2$, $R_3$ représentent de l'hydrogène, un halogène, notamment Cl, Br, F, un groupe carboxy, alkyle, notamment alkyle en $C_1$ à $C_6$ et alkoxy, notamment alkoxy en $C_1$ à $C_6$,

caractérisé en ce qu'on fait réagir du chlorure de cyanuryle dans un phénol de formule

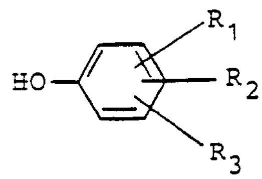

(III)

avec environ 1,6 à environ 2,4 moles des amines A—$NH_2$ et/ou B—$NH_2$ en l'absence essentielle de composés à réaction alcaline à des températures d'environ 80 à environ 200 °C pour former des mélanges de composés des formules I et II que l'on isole ensuite.

2. Procédé suivant la revendication 1, caractérisé en ce que A et B désignent des restes de composés quinoniques polycycliques.

3. Procédé suivant la revendication 1, caractérisé en ce que A et B représentent des restes de 9,10-anthraquinones ou d'anthraquinones qui contiennent d'autres noyaux carbocycliques et/ou hétérocycliques condensés.

4. Procédé suivant les revendications 1 à 3, caractérisé en ce qu'on utilise le phénol.

5. Procédé suivant les revendications 1 à 3, caractérisé en ce qu'on utilise le 2-, le 3- ou le 4-chlorophénol, le 2,4-dichlorophénol, un 2-, 3- ou 4-alkoxyphénol, notamment le 2-, 3- ou 4-méthoxyphénol, un 2-, 3- ou 4-alkylphénol, notamment le 2-, le 3- ou le 4-méthylphénol ou des carboxyphénols.

6. Procédé suivant la revendication 1 pour l'obtention de mélanges de colorants qui contiennent des colorants des formules

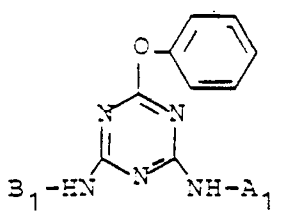 et 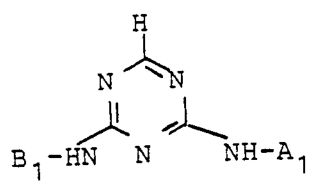

(IV) (V)

dans lesquelles $A_1$, $B_1$ sont des restes anthraquinonyle-1, 5-benzoylamino-anthraquinonyle-1, 3,4-phtaloylacridonyle-2 ou 7-bromo-3,4-phtaloylacridonyle-2, de préference un seul des restes $A_1$ ou $B_1$ représentant, le cas échéant, le reste anthraquinonyle-1.

7. Procédé suivant la revendication 6 pour l'obtention de mélanges de colorants des formules IV et V, dans lesquelles $A_1$ est égal à $B_1$ et représentent un reste 5-benzoylamino-anthraquinonyle-1, 3,4-phtaloylacridonyle-2 ou 7-bromo-3,4-phtaloylacridonyle-2.

8. Procédé suivant les revendications 1 à 7, caractérisé en ce qu'on conduit la réaction à 100-180 °C.

9. Procédé suivant les revendications 1 à 8, caractérisé en ce qu'on opère avec un rapport des amines au chlorure de cyanuryle de 1,8 à 2,2 : 1.

10. Procédé suivant les revendications 1 à 8, caractérisé en ce qu'on opère avec un rapport des amines au chlorure de cyanuryle de 1,9 à 2,1 : 1.